# EUROPEAN PATENT APPLICATION

(11) **EP 1 710 011 A1**
(43) Date of publication of application: **11.10.2006**
(21) Application number: 05102721.7
(22) Date of filing: 07.04.2005
(51) Int. Cl.: B01D 71/68

(54) **Filtration membrane**

(71) Applicant: Gambro Lundia AB, 220 10 Lund (SE)
(72) Inventor: Krause, Bernd, 72414 Rangendingen (DE); Hornung, Markus, 72762 Reutlingen (DE); Ertl, Thomas, 72406 Bisingen (DE); Storr, Markus, 70794 Filderstadt (DE)
(74) Representative: Weber, Dieter

(57) **Abstract**

The invention is directed to a filtration membrane that is capable for the retention of endotoxines and cytokine inducing substances (CIS) including bacterial DNA and/or DNA fragments from fluid and/or liquid media. The invention is further directed to a method of manufacturing such filtration membranes in a high quality and in an effective and time saving procedure, and to the use of such membranes for the retention of substances from fluids or liquids. The filtration membrane of the invention consists of a polymer blend comprising at least one hydrophobic polymer containing sulfur in its back bone, at least one hydrophilic, uncharged homo-polymer of polyvinylpyrrolidone and at least one polymer containing cationic charges. The method of manufacturing such a filtration membrane comprises dissolving at least one hydrophobic polymer containing sulfur in its back bone and at least one hydrophilic, uncharged polyvinylpyrrolidone and at least one polymer containing cationic charges in at least one solvent to form a polymer solution, subjecting the formed polymer solution to a diffusion-induced phase separation to prepare a filtration membrane, washing and subsequently drying of the filtration membrane.

## Description

The present invention is directed to a filtration membrane. Furthermore this invention is directed to a method of manufacturing filtration membranes of the afore mentioned kind and the use of such membranes for the retention of substances from fluids or liquids.

In the semi-conductor and food-processing industry as well as for medical and environmental applications there is a continuous need for improved high sufficient filtration membranes for the removal of unwanted substances from fluid or liquid media.

In some medical applications, such as preparation of infusion solutions or dialysis of the human blood, it is required to have filtration membranes that are capable for the retention of bacterial endotoxines and/or pyrogens from fluids. Pyrogens or cytokine inducing substances (CIS) may be for instance cellular fragments of bacteria, such as lipopolysaccharides. Less than 0.2 µg/KG CIS are sufficient to induce fever in humans when applied intravenously.

The approaches in the development of filter devices for the retention of the substances comprise materials with strongly adsorptive effects, particularly materials with porous structures. To further improve the retention properties some materials have been provided with coatings containing charged polymers that are applied on uncharged membrane matrices.

The known materials are commonly microporous membranes with pore sizes from 0.01 to 10 µm. The draw back of these materials is, that it could be shown, that they may be passed by a significant amount of DNA, in particular by small DNA fragments. The contaminant oligonucleotides are generally double stranded deoxynucleotides, which originate largely from bacteria and other microorganisms, but can also be single stranded deoxynucleic acids or ribonucleic acids. These oligonucleotides can range in size from about 200-500 nucleotides to as little as 5-10 nucleotides.

In this context it should be noted, that oligonucleotides play a major role as a source of chronic and acute inflammatory stimulation, which is underscored by the fact that lipopolysaccharides and bacterial DNA can act synergistically to stimulate the release of pro-inflammatory cytokines, such as TNF alpha, by macrophages [Gao et al. (2001) J Immunol; 166: 6855-6860]. Thus, there is a need for improved filtration membranes capable of filtering even the aforementioned small DNA fragments from liquid media.

A further drawback of the known materials with charged polymer coatings is, that the coating step is a second manufacturing step, which further has to be followed by the step of cross-linking the coating to reduce the solubility of the formed layer. Apparently this manufacturing procedure is rather complex and time consuming.

It is therefore the object of the present invention to provide membranes of the afore mentioned kind that are capable for the retention of endotoxines and cytokine inducing substances (CIS) including bacterial DNA and/or DNA fragments from fluid and/or liquid media. Furthermore, it is the according object of this invention to provide a method of manufacturing such membranes in a high quality and in an effective and time saving procedure.

This object has been solved by a filtration membrane consisting of a polymer blend comprising
a) at least one hydrophobic polymer containing sulfur in its back bone,
b) at least one hydrophilic, uncharged homo-polymer of polyvinylpyrrolidone and
c) at least one polymer containing cationic charges.

This application describes an ultra filtration membrane that owns cationic charged groups in a porous structure and has the ability to remove bacterial DNA and other cytokine inducing substances as well as endotoxines from process fluids such as water or dialysate. It is of great importance, that the positively charged polymer is distributed within the blend of the polymer matrix comprising a hydrophobic polymer containing sulfur in its back bone and polyvinylpyrrolidone.

The advantage of membranes according to the present invention is that the separation is based on a combination of three different types of separation principles. On the one hand the inventive membranes function as anion exchanger and may filter unwanted substances from process fluids according to their ionic properties. Furthermore the inventive membranes provide hydrophobic domains that are capable of adsorbing respective substances unspecifically. The third feature with regard to the retention properties of the inventive membranes is the size exclusion filtration of substances of a certain molecular size.

Due to the above combination of separation principles, membranes of the inventive composition and structure have the ability to remove cytokine inducing substances including bacterial DNA fragments from process fluids. Simultaneously the inventive membranes do also remove endotoxines from process fluids, mainly by size exclusion.

In a preferred embodiment of the present invention the hydrophobic polymer containing sulfur in its back bone comprises at least one member of the group consisting of polysulfone, polyethersulfone or polyarylethersulfone.

The hydrophobic polymer containing sulfur in its back bone determines the hydrophobic properties of the blend to a certain extent and provides the material with increased thermic stability. Due to the selection of hydrophobic polymer or hydrophobic polymers from the above group, the hydrophobic and/or thermic properties may be tuned to the desired level.

For the fine tuning of the hydrophobic/hydrophilic properties of the polymer blend the blend preferably contains at least two hydrophilic uncharged homo-polymers of polyvinylpyrrolidone. It is particularly preferred, if the polyvinylpyrrolidones are selected such, that the average relative molecular weight of at least one homo-polymer of polyvinylpyrrolidone in the blend is about 10.000 to 100.000. Most preferably the molecular weight of at least one homo-polymer of polyvinylpyrrolidone is about 30.000 to 60.000. For at least one second homo-polymer of polyvinylpyrrolidone in the blend the average relative molecular weight is about 500.000 to 2.000.000. Preferably this second homo-polymer of polyvinylpyrrolidone has an average relative molecular weight of about 800.000 to 2.000.000.

The relative molecular weight of a substance is defined as the sum of relative atomic weights of the atoms in this substance, whereby the relative atomic weight is defined as the ratio of the average mass per atom of an element to 1/12 of the mass of nuclide ¹²C.

The advantage of incorporating two different polyvinylpyrrolidones selected within the above ranges is the possibility to tune the hydrophobic/hydrophilic properties of the inventive membrane very fine and exact within a wide range. This is of certain importance, since the flux of such membranes is highly influenced by these properties, e.g. if the hydrophilic nature of the membrane is increased with the pore size remaining the same, less pressure is required to keep the flux. Furthermore the hydrophobic/hydrophilic nature has to be adjusted such that the adsorptive capacity of uncharged components from the feed stream is optimized in order to improve Van-der-Waals-forces and adsorption on hydrophobic sides. A second aspect that has to be contributed to besides sufficient water flux is to provide the membrane with the required wetability with regard to the respective fluids or liquids to be treated.

To be able to further fine tune the hydrophobic/hydrophilic properties of the filtration membrane the polymer blend comprises additionally at least one polyamide in preferred embodiments.

Regarding the molecular weight of the membrane components it is preferred that the polymer containing cationic charges has an average relative molecular weight of more than 200.000, preferably of more than 500.000. The selection of the molecular weight of the cationic charge modified polymer is of great importance, since it has to be high enough to allow sufficient entanglement in the polymer matrix, which reduces the solubility in the membrane structure. That is the higher the molecular weight of the charged polymer, the minimum the loss of this modified polymer during the usage of the membrane.

Preferably the polymer containing cationic charges comprises tertiary and/or quaternary ammonium groups. In particularly preferred embodiments of the invention the polymer containing cationic charges comprises polyethylenimine and/or modified polyethylenimine. In another preferred embodiment of this invention the polymer containing cationic charges comprises a modified polyphenyleneoxide having cationic charges.

The membranes according to the present invention have preferably pores with pore sizes of 0.001 to 0.01 µm. Most preferably the average pore size is less than 0.01 µm in the selective layer of the membrane.

In another preferred embodiment of the present invention the filtration membrane is characterized in that it shows a nominal cut-off value below 100.000 g/mol. The nominal cut off (g/mol) represents a value determined from the sieving coefficients of a membrane for substances with different molecular weight. It gives a calculated value for the molecular weight of a compound that would have a sieving coefficient of 10 %. The sieving coefficient of a membrane is determined by pumping a protein solution under defined conditions through a membrane bundle and determining the concentration of the protein in the feed, in the retentate and in the filtrate, which will be explained in further detail below.

In order to obtain the above mentioned membranes the present invention provides a method of manufacturing a filtration membrane, wherein said method comprises the steps of dissolving at least one hydrophobic polymer containing sulfur in its back bone and at least one hydrophilic, uncharged polyvinylpyrrolidone and at least one polymer containing cationic charges in at least one solvent to form a polymer solution, subjecting the formed polymer solution to a diffusion-induced phase separation to prepare a filtration membrane, washing and subsequently drying of the filtration membrane. The advantage of this process is that the cationic charge modified membranes are formed in one step. That is the additional process steps in the prior art, such as application of coatings containing charged polymers on uncharged membrane matrices and a subsequent cross-linking for reducing the solubility of the formed layer are not required in the inventive method, and the manufacturing process for a filtration membrane according to the invention, therefore, is time and cost saving.

Preferably the diffusion-induced phase separation is performed by a solvent phase inversion spinning, wherein the formed polymer solution is extruded through an outer ring slit of a nozzle with two concentric openings and a center fluid is extruded through the inner opening of the nozzle. By this method the inventive membrane is obtained in the form of a hollow fibre. The center fluid extruded through the inner opening of the nozzle comprises preferably 30 to 55 wt.-% of a solvent and 45 to 70 wt.-% of a precipitation medium chosen from the group comprising water, glycerol and other alcohols. More preferably the center fluid comprises in addition a hydrophilic polymer, which is preferably contained in a concentration of 0.1 to 2 wt.-%.

The polymer solution emerging from the outer slit opening is, on the outside of the precipitating hollow fibre, exposed to a humid steam/air mixture, in a specific embodiment of the inventive method of manufacturing a filtration membrane. The temperature of the humid steam/air mixture preferably is within the range of 30 to 70°C. The relative humidity in the humid steam/air mixture is between 60 and 100%. The humid steam/air mixture preferably has a solvent content of between 0.5 and 5 wt.-% related to the water content.

Regarding the concentration of the polymer components in the polymer solution the hydrophobic polymer containing sulfur in its back bone is contained in the solution preferably at a concentration of 8 to 23 wt.-%, more preferably at a concentration of about 11 to 17 wt.-%. The at least one polyvinylpyrrolidone is contained in the solution at a concentration of about 1 to 15 wt.-%. More preferably the concentration of at least one polyvinylpyrrolidone in the polymer solution is of about 2 to 10 wt.-%. However, most preferably the polymer solution contains at least two different hydrophilic, uncharged polyvinylpyrrolidones. That is, in preferred embodiments of the inventive method, the at least two polyvinylpyrrolidones included in the polymer solution are together contained at a concentration of 1 to 15 wt.-% or more preferably 2 to 10 wt.-%.

If there are employed at least two different polyvinylpyrrolidones in the polymer solution, preferably a first of the at least two different polyvinylpyrrolidones has an average relative molecular weight in the range of from about 10.000 to 100.000. In this preferred method the second of the at least two different polyvinylpyrrolidones has an average relative molecular weight in the range of from about 500.000 to about 2.000.000. Most preferably the ratio of said first to said second polyvinylpyrrolidone in the polymer solution is in the range of 2:1 to 10:1, and particularly preferred of about 3:1.

It is assumed that the low molecular weight polyvinylpyrrolidone will be partly washed out during the manufacturing procedure. Due to that washing out a certain part of the desired pores will be obtained. However, the hydrophobic polymer containing sulfur in its back bone, such as polyethersulfone, does form pores during the diffusion-induced phase separation itself.

In preferred embodiments the polymer containing cationic charges is contained in the solution at a concentration of about 0.1 to 4.0 wt.-% and is contained in specific preferred embodiments in the solution at a concentration of about 0.2 to 2 wt.-%.

In another preferred method according to the invention, there is additionally at least one polyamide dissolved in the polymer solution before subjecting the polymer solution for the diffusion-induced phase separation, wherein the polyamide preferably is contained in the polymer solution at a concentration of about 0.005 to 1 wt.-%. Most preferably the at least one polyamide is contained in the polymer solution at a concentration from about 0.01 to 1 wt.-%. The polyamide does not dissolve homogeneously in the polymer solution, whereas the inventive polymer solution is preferably homogeneous and in most cases clear. However, in some cases it might appear that a formed polymer solution is slightly turbid. To overcome the effect of turbidity in some cases a solvent exchange may be required (see example 2). Solvents are preferably chosen from the group comprising N-methylpyrrolidone (NMP), dimethylacetamide (DMAC), dimethylsulphoxide (DMSO), dimethylformamide (DMF), butyrolactone, N-ethylpyrrolidone (NEP), N-octylpyrrolidone (NOP). For the person skilled in the art it is clear, that also mixtures of the above solvents may be used. The preferred solvent in the inventive manufacturing process is N-methylpyrrolidone (NMP).

In a specific preferred embodiment of the present invention the composition of the polymer spinning solution for membrane formation comprises 8 to 23 wt.-% polyarylethersulfone, 0.2 to 4 wt.-% cationic charged polymer, 0.5 to 7 wt.-% polyvinylpyrrolidone with an average relative molecular weight in the range of from about 500.000 to about 2.000.000, 0.5 to 8 wt.-% polyvinylpyrrolidone with an average relative molecular weight in the range of from about 10.000 to 100.000, ≤ 5 wt.-% water and ≤ 1 wt.-% polyamide added up to 100 wt.-% with N-methylpyrrolidone. In another preferred embodiment the above polymer spinning solution composition may comprise a certain amount of suitable additives, which may be comprised at a concentration of up to 7.5 wt.-%. These additives are preferably chosen from the group comprising of water, glycerol and other alcohols.

The above-mentioned inventive membranes are preferably used for the retention of cytokine inducing substances and/or oligonucleotides. Even more preferably the inventive filtration membranes are used for the retention of cytokine inducing oligonucleotides. Furthermore the inventive membranes may be used for the removal of endotoxins from liquids and/or fluids. The filtration membranes may be used in the form of hollow fibres, tubes or flat membranes. Particularly preferred is the use of the filtration membranes according to the invention in the form of hydrophilic hollow fibre membranes.

The inventive filtration membranes may be used for the purification of water in the food processing industry and in environmental applications. Preferably the inventive membranes are used in medical applications, such as for the preparation of infusion solutions and in the dialysis of the human blood. Furthermore, the membranes may be used for the deionisation of water in semi-conductor manufacturing processes.

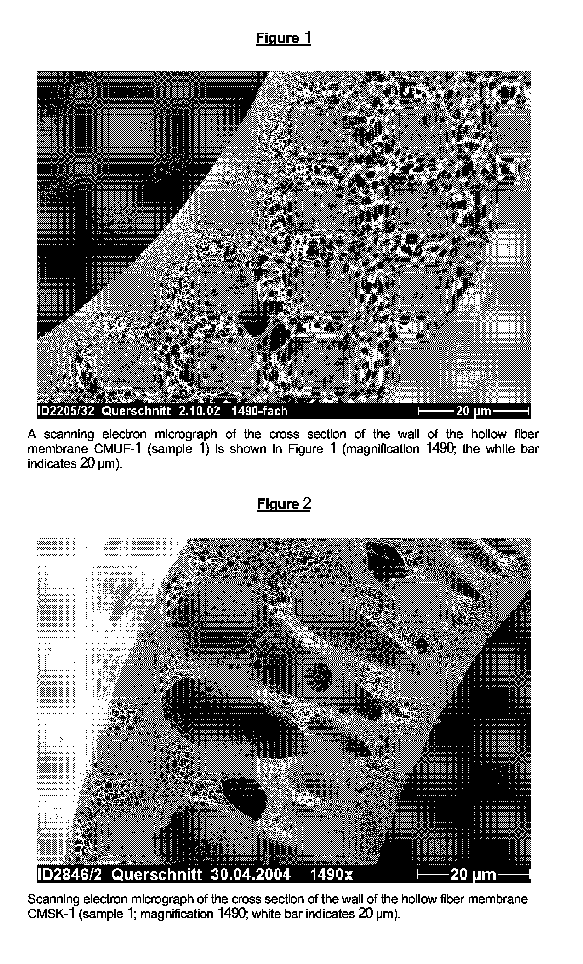

The membranes of the inventive composition and structure and as obtained by the inventive manufacturing procedure are unisotropic membranes, wherein the pores on the outside are larger in size than the ones on the inner parts of the filtration membrane. This becomes more clearly from the scanning electron micrographs of cross sections through the walls of inventive hollow fibres, which are shown in figures 1 and 2. The membranes according to the present invention have preferably pores with pore sizes of 0.001 to 0.01 µm. Most preferably the average pore size is less than 0.01 µm in the selective layer of the membrane.

The morphology of the separation layer as well as the overall structure of the membrane can vary widely and influence the retention and adsorption behaviour of the membrane. The overall structure could have a sponge like structure or other rather asymmetric structures, e.g. finger type structures. However, also mixtures of these structures would be possible for the adsorptive membrane, e.g. sponge like structure with large cavities in the centre of the wall, etc.

Using a triple spinneret having the possibility to spin with two different polymer solutions allows to prepare layered structures with different composition of these layers. The number of layers can be increased depending on the ability to build the required spinnerets. Even three or four layers might be possible. Using the multi spinnerets the position of the charge modified layer in the wall structure can be tailored. It would be possible to have an uncharged layer of 1 or 2 µm at the inside and a substructure layer with charged moieties in the structure. This would allow to transport sensitive material at the inside of the membrane and the filtrate could be still in contact with the charged surface of the membrane wall. These are only examples how to distribute the charged polymers in different parts of the structure. An experienced membrane technologist might generate even different structures as described here.

For the purpose of original disclosure it is to be noted that any features which may be gathered by a skilled person from the present description, the drawings and the claims, even if only described in connection with particular further features, may be combined individually as well as in arbitrary combinations with any other of the features or groups of features disclosed herein, unless this is explicitly excluded or technical conditions would render such combinations impossible or senseless.

The comprehensive, explicit discussion of any combinations of features which might be thought of is dispensed with just for the sake of brevity and legibility of the description and claims. However, some of these combinations will become apparent in view of the below figures and examples for instance.

The following figures are comprised in the description and will be discussed in more detail further below in the examples:
Figure 1 shows a scanning electron micrograph of the cross section of a wall of the hollow fibre membrane described in example 1.
Figure 2 shows a scanning electron micrograph of the cross section of a wall of the hollow fibre membrane described in example 2.
Figure 3 shows a graphical scheme of double stranded DNA retention properties of the membranes described in the comparative example to example 1 in section b).

### Examples

### Analytical methods for the examples:

### 1. Membrane bundle preparation:

The preparation of the membrane bundle after the spinning process is necessary to prepare a test device for subsequent performance tests (measurement of the hydraulic permeability, measurement of different sieving coefficients and for the single stranded (ss) DNA retention test). The fibre bundles are fixed near their ends by a filament. The fibre bundle is transferred into a sterilisation tube and afterwards, steam sterilisation is carried out. However, sterilization is not limited to steam. Other sterilization methods might be used. After the sterilisation, the fibre bundle is cut to a defined length. The next process step consists of closing the ends of the fibres. An optical control ensures that all fibres are closed. Then, the ends of the fibre bundle are transferred into a potting cap. The potting cap is fixed mechanically and a potting tube is put over the potting caps. Afterwards, the potting is done with polyurethane or epoxide glue. In the next process step, the potted membrane bundle is cut to a defined length.

Thereafter the membrane bundles are stored dry before they are used for the different performance tests.

### 2. Hydraulic Permeability (Lp):

The hydraulic permeability of a membrane bundle is determined by pressing an exact defined volume of water under defined pressure through the membrane bundle which is closed on the one side of the bundle and measuring the required time. The hydraulic permeability can be calculated with the determined time, the effective membrane surface area, the applied pressure and the volume of water, which is pressed through the membrane. The effective membrane surface area can be calculated by the number of fibres, the fibre length and the inner diameter of the fibre. The membrane bundle has to be wetted before the test is performed. Therefore, the membrane bundle is put in a box containing 500 mL of ultrapure water. After some time, the membrane bundle is transferred into the testing system. The testing system consists of a water bath, that is tempered at 37 °C and a device where the membrane bundle can be implemented mechanically.

The Lp Value is expressed in cm³ / (cm² x sec x bar)

### 3. Sieving coefficient and nominal cut-off:

The sieving coefficient of a membrane is determined by pumping a protein solution (albumin, myoglobin) under defined conditions (Flow rate, TMP and filtration rate) through a membrane bundle and determining the concentration of the protein in the feed, in the retentate and in the filtrate. If the concentration of the protein in the filtrate is zero, a sieving coefficient of 0 % is obtained. If the concentration of the protein in the filtrate equals the concentration of the protein in the feed and the retentate, a sieving coefficient of 100 % is obtained. Sieving coefficients of substances with different molecular weight (logarithmic scale) allow to determine the nominal cut-off of a membrane by inter- or extrapolation of the data measured (nominal cut off (g/mol): corresponding to a sieving coefficient of 10 %).

For the determination of the sieving coefficient the concentration of the used myoglobin can be adjusted between 10 and 10000 mg/L. Myoglobin is dissolved in a PBS buffer with a pH of 7,2. The concentration of the used albumin can be adjusted between 100 and 80000 mg/l. Albumin is dissolved in a PBS buffer with a pH of 7,2. If flakes are occurring during the dissolution, a filtration over a filter has to be carried out.

### 4. ssDNA Test:

In the whole application several synonyms are used to describe the adsorption of single-stranded (ss) DNA. In this description DNA, ssDNA, Oligonucleotides and ss-Oligonucleotides are used to describe ss-DNA. If tests are performed using double stranded DNA this is explicitly mentioned.

The ss-DNA was obtained from TIB MOLBIOL Syntheselabor, Berlin, Germany. The test-Kit to analyse the ss-DNA was obtained from Molecular Probes Inc., USA. The product information of the OliGreen ssDNA Quantification Reagent and Kit (order number O-7582 and O-11492) fully describe the analytical procedure to determine ssDNA. The test set-up consists of a membrane bundle, tubing, a pump and the test fluid. The test fluid does contain a determine an amount of ssDNA. The test is performed in dead end filtration mode.

The retention, i.e. adsorption behaviour is expressed as follows:
DNA-LRV (Concentration) = log (Start Solution / MW1)
MW1 = (sum of the concentrations of the different filtrate samples take during the test procedure)/(number of samples taken)
DNA-LRV (Mass) = log(mass DNA Start Solution / mass DNA Filtrate-Pool)

### Example 1:

A polymer solution is prepared by dissolving polyethersulfone (PES; BASF Ultrason 6020), polyvinylpyrrolidone (PVP; BASF K30 and K90), water and a charge modified polyphenylenoxide (PPO; FUMATECH) in N-Methylpyrrolidone (NMP). The weight fraction (wt.-%) of the different components in the polymer spinning solution was:

| | |
|---|---|
| PES | 14,22 |
| PVP (K90) | 1,5 |
| PVP (K30) | 5,0 |
| PPO | 0,28 |
| water | 2 |
| NMP | 77 |

The chemical structure of the monomer unit of the charge modified polyphenylenoxide used is shown below: 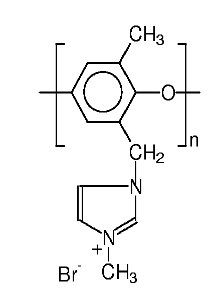 This application, however, is not limited to this specific cationic charge modification of the polyphenylenoxide (PPO). Also other modifications of a polyphenylenoxide having a cationic charge might be possible. The experienced chemist might generate a number of different substance classes based on PPO. The advantage of the above material is, that the polymer forms in the concentration range used a homogeneous solution with the components of the polymer solution (PES; PVP; water) in NMP.

To prepare the solution first NMP is filled into a three neck-flask with finger-paddle agitator in the center neck. The PVP is added to the NMP and is stirred at 50 °C until a homogeneous clear solution is prepared. After this the polyethersulfone is added and finally the charge modified polyphenylenoxide and water. The mixture is stirred until a clear high viscous solution is obtained.

A membrane is formed by heating the polymer solution up to 40 °C and passing the solution through a spinning die. As bore liquid a water / NMP / PVP K30 mixture containing 55 wt.-% water, 1 wt.-% PVP K30, and 44 wt.-% NMP is used. The diameter of the inner bore is 170 µm and the outer orifice is 600 µm. The hollow fiber membrane is formed at a spinning speed of 28 m/min. The liquid capillary leaving the die is passed through a conditioned room into a water bath having a temperature of 20 °C. The formed hollow fiber membrane is guided through 5 different water baths. Finally, the membrane is winded onto a winding-up equipment. The fibers are transferred into bundles and washed with water at 75 °C to remove traces of NMP and water soluble polymer residuals. The dry hollow fiber membrane has an inner diameter of 214 µm and an outer diameter of 312 µm and a fully asymmetric membrane structure. The active separation layer of the membrane is at the inner lumen side. The active separation layer is defined as the layer with the smallest pores. The hydraulic permeability (Lp value) of the membrane is measured from inside to outside using a method described earlier. The membrane showed a hydraulic permeability of 53 x 10⁻⁴ cm³/(cm² bar sec). The sieving coefficient for albumin (Mw 69.000 g/mol) was 8 % and the sieving coefficient for myoglobin (Mw 17.000 g/mol) was 80 %. The sieving coefficients are measured in aqueous solution. From this the nominal cut-off (sieving coefficient for a certain solute is 10 %) is at around 68.000.

A scanning electron micrograph of the cross section of the wall of the obtained hollow fiber membrane (CMUF-1) is shown in Figure 1. The wall shows an asymmetric structure with the smallest pores at the inside of the hollow fiber (lumen side). The structure shows an overall sponge like structure.

### Comparative Example to Example 1:

A membrane with similar sieving coefficients and nominal cut off is prepared from a solution that does not contain the charge modified polyphenylenoxide. This uncharged ultrafiltration membrane (UUF 1) together with the charge modified membrane containing modified polyphenylenoxide (CMUF-1) prepared as described above are used for retention experiments of single stranded DNA.
a) The membranes are steam sterilized and small modules are prepared from the fiber bundles having an inner surface area of 360 cm³. The DNA retention is tested (see DNA Test - method) and following retention values for DNA are measured. Two different batches from the CMUF-1 are prepared and tested. These two different batches are named CMUF-1 sample 1 and 2.
DNA retention measurement results for CMUF-1 and UUF-1 samples are presented in Table 1.

**Table 1: DNA retention measurement results for CMUF-1 and UUF-1 samples**

| Sample | Start Solution | Filtrate after 100 ml | Filtrate after 200 ml | Filtrate Pool | LRV (DNA) (mass) |
|---|---|---|---|---|---|
| | Concentration ssDNA in pg/ml | | | | |
| CMUF-1 Sample 1 | 754821 | 615 | 51555 | 25955 | 1,46 |
| CMUF-1 Sample 2 | 754107 | 1667 | 30482 | 14140 | 1,73 |
| UUF-1 | 821565 | 820280 | 821988 | 820345 | 0,00 |

b) The membranes prepared in Example 1: (i) the charge modified membrane containing modified polyphenylenoxide (CMUF-1), and (ii) the uncharged ultrafiltration membrane (UUF 1) have been used to measure the retention behaviour of DNA with a double helix structure (double stranded DNA). The Deoxyribonucleic Acid (from E. coli) was obtained from ICN Biomaterials, Aurora, Ohio, USA; order number 101503. It has to be mentioned that the molecular weight distribution of this material is very broad.

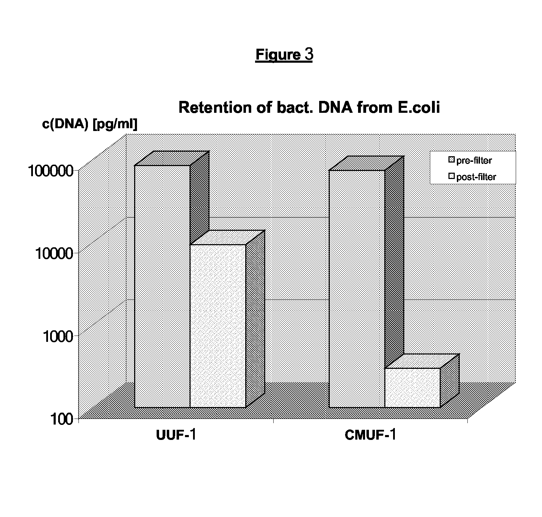

The double stranded DNA retention behavior of UUF-1 and CMUF-1 is shown in Figure 3. Due to the large molecular weight distribution we also see that size exclusion plays a role in the separation of the used DNA. Because of the size exclusion the UUF-1 membrane shows rejection of double stranded DNA.

Both membranes prepared (UUF-1 and CMUF-1) show the same hydraulic permeability, have been prepared using the same technique, do show the same overall membrane morphology and give similar results in cut-off measurements. From all these results one can conclude that the sieving characteristics are identical and the difference in retention is due to the fact of adsorption.

### Example 2:

A polymer solution is prepared by dissolving polyethersulfone (PES; BASF Ultrason 6020), polyvinylpyrrolidone (PVP; BASF K30 and K90), water and a polyethylenimine (Lupasol SK from BASF, Ludwigshafen; Germany) in N-Methylpyrrolidone (NMP). The weight fraction (wt.-%) of the different components in the polymer spinning solution was:

| | |
|---|---|
| PES | 17,0 |
| PVP (K90) | 0,6 |
| PVP (K30) | 6,0 |
| Lupasol SK | 0,80 |
| water | 2,6 |
| NMP | 73 |

Lupasol SK is a modified high molecular weight ethylenimine homopolymer and is sold as aqueous liquid having a solid content of approx. 23 - 25,5 wt.%. The cationic charge density of this material is characterized by the producer with approx. 8 meq/g. Lupasol SK has a relative average molecular weight (M_{w}) of about 2.000.000 g/mol.

The formed solution is slightly turbid. To overcome the effect of solution turbidity or to control the amount of NMP a solvent exchange can be performed. For this the aqueous Lupasol SK solution is mixed with the same amount of NMP and the Water is removed by evaporation at reduced pressure. By doing so much higher concentrations can be adjusted in the polymer solution and still obtaining a clear transparent solution.

The solution preparation procedure is identical to Example 1.

A membrane is formed by heating the polymer solution up to 50 °C and passing the solution through a spinning die. As bore liquid a water / NMP mixture containing 54 wt.-% water and 46 wt.-% NMP is used. The wall thickness of the inner tube having a inner diameter of 170 µm is 85 µm. The hollow fiber membrane is formed at a spinning speed of 40 m/min. The liquid capillary leaving the die is passed through a conditioned room into a water bath having a temperature of 20 °C. The formed hollow fiber membrane is guided through 5 different water baths. Finally, the membrane is winded onto a winding-up equipment. The dry hollow fiber membrane has an inner diameter of 215 µm and an outer diameter of 311 µm and a fully asymmetric membrane structure. The active separation layer of the membrane is at the inner lumen side. The active separation layer is defined as the layer with the smallest pores. The hydraulic permeability (Lp value) of the membrane is measured from inside to outside using a method described earlier. The membrane showed a hydraulic permeability of 45 x 10⁻⁴ cm³/(cm² bar sec). The sieving coefficients for albumin and myoglobin have been determined and measured in aqueous solutions. From this a nominal cut-off (sieving coefficient for certain solutes is 10%) of around 60.000 g/mol has been calculated.

A scanning electron micrograph of the cross section of the wall of the hollow fiber membrane obtained (CMSK-1) is shown in Figure 2. The wall shows an asymmetric structure with the smallest pores at the inside of the hollow fiber (lumen side). The structure shows an overall finger type structure.

### Comparative Example to Example 2:

A membrane with similar sieving coefficients and nominal cut-off is prepared from a solution that does not contain the cationic charged Lupasol SK. This uncharged ultrafiltration membrane (UUF 2) together with the charge modified membrane containing modified Lupasol SK (CMSK-1) prepared as described above are used for retention experiments of single stranded DNA.

The membranes are steam sterilized and small modules are prepared from the fiber bundles having a inner surface area of 360 cm³. The DNA retention is tested (see DNA Test - method) and following retention values for DNA are measured. Two samples from the CMSK-1 batch are prepared and tested. These two different samples are named CMSK-1 sample 1 and 2.

The DNA retention measurement results for CMSK-1 and UUF-2 samples are presented in Table 2.

**Table 2: DNA retention measurement results for CMSK-1 and UUF-2 samples**

| Sample | Start Solution | Filtrate after 500 ml | Filtrate after 1000 ml | Filtrate Pool | LRV (DNA) (mass) |
|---|---|---|---|---|---|
| | Concentration ssDNA in pg/ml | | | | |
| CMSK-1 Sample 1 | 684605 | 20033 | 457572 | 33050 | 1,32 |
| CMSK-1 Sample 2 | 854901 | 27920 | 409910 | 54349 | 1,20 |
| UUF-2 | 713247 | 651305 | 716768 | 678260 | 0,02 |

### Example 3:

The third experiment has been carried out identical to Example 2. However, the temperature of the spinning die was increased by 4 °C and the amount of Lupasol SK added to the polymer solution was 0,28 wt.-%. The water content in this polymer solution was 2.0 wt.-%. All other polymer fractions were kept constant. The polymer preparation procedure, the membrane formation procedure and all other process steps were kept as described in Example 2.

The dry hollow fiber membrane has an inner diameter of 213 µm and an outer diameter of 311 µm and a fully asymmetric membrane structure. The active separation layer of the membrane is at the inner lumen side. The hydraulic permeability (Lp value) of the membrane is measured from inside to outside using a method described earlier. The membrane showed a hydraulic permeability of 127 x 10⁻⁴ cm³/(cm² bar sec). The sieving coefficient for albumin (Mw 69.000 g/mol) was 20 % and the sieving coefficient for myoglobin (Mw 17.000 g/mol) was 89 %. The sieving coefficients are measured in aqueous solution. From this the nominal cut-off (sieving coefficient for a certain solute is 10 %) is at around 82.000. This value is obtained by linear extrapolation of the measured sieving coefficients.

The charge modified membrane containing modified Lupasol SK (CMSK-2) prepared as described above are used for retention experiments of single stranded DNA. The membranes are steam sterilized and small modules are prepared from the fiber bundles having a inner surface area of 360 cm³. The DNA retention is tested (see DNA Test - method) and following retention values for DNA are measured.

The LRV (DNA) mass was measured for CMSK-2 and resulted in 2,29. The amount of solution used was 250 ml and the start concentration in the feed solution was 827640 pg/ml.

### Example 4:

A polymer solution is prepared by dissolving polyethersulfone (BASF Ultrason 6020), polyvinylpyrrolidone (BASF K30 and K85), water and a polyethylenimine (Lupasol P from BASF, Ludwigshafen; Germany) in N-Methylpyrrolidone (NMP). The weight fraction (wt.-%) of the different components in the polymer spinning solution was:

| | |
|---|---|
| PES | 14,0 |
| PVP (K85) | 1,5 |
| PVP (K30) | 5,0 |
| Lupasol P | 0,50 |
| NMP | 79 |

The formed solution is clear-transparent.

Lupasol P is a high molecular weight polyethylenimine and is sold a aqueous liquid having as solid content of approx. 48 - 52 wt.%. The cationic charge density of this material is characterized by the producer with approx. 20 meq/g. Lupasol P has a relevant average molecular weight (M_{w}) of about more than 750.000 g/mol.

To independently control the amount of water added to polymer solution a solvent exchange has been performed with the Lupasol P solution. The same amount of NMP was added to a Lupasol P solution and the water was removed by vacuum distillation. The obtained solution containing only Lupasol P and NMP was used in this example.

The solution preparation procedure is identical to Example 1. However, the solution containing Lupasol P in NMP is added first for the solution preparation.

A membrane is formed by heating the polymer solution up to 50 °C and passing the solution through a spinning die. As bore liquid a water / NMP mixture containing 56 wt.-% water and 44 wt.-% NMP is used. The diameter of the inner bore is 170 µm and the outer orifice is 600 µm. The hollow fiber membrane is formed at a spinning speed of 45 m/min. The liquid capillary leaving the die is passed through a conditioned room into a water bath having a temperature of 20 °C. The formed hollow fiber membrane is guided through 5 different water baths. Finally, the membrane is winded onto a winding-up equipment. The dry hollow fiber membrane has an inner diameter of 218 µm and an outer diameter of 315 µm and a fully asymmetric membrane structure. The active separation layer of the membrane is at the inner lumen side. The active separation layer is defined as the layer with the smallest pores. The hydraulic permeability (Lp value) of the membrane is measured from inside to outside using a method described the earlier. The membrane (CMP-1) showed a hydraulic permeability of 67 x 10⁻⁴ cm³/(cm² bar sec). The sieving coefficients for albumin and myoglobin have been determined and measured in aqueous solutions. From this a nominal cut-off (sieving coefficient for certain solute is 10%) of around 73.000 g/mol has been calculated.

### Comparative Example to Example 4:

A membrane with similar sieving coefficients and nominal cut off is prepared from a solution that does not contain the cationic charged Lupasol P (Lp : 63 x 10⁻⁴ cm³/(cm² bar sec). This uncharged ultrafiltration membrane (UUF-3) together with the charge modified membrane containing modified Lupasol P (CMP-1) prepared as described above are used for retention experiments of single stranded DNA.

The membranes are steam sterilized and small modules are prepared from the fiber bundles having a inner surface area of 360 cm³. The DNA retention is tested (see DNA Test - method) and following retention values for DNA are measured. Two samples from the CMP-1 batch are prepared and tested. These two different samples are named CMP-1 sample 1 and 2. The test results are presented in Table 3.

**Table 3: DNA retention measurement results for CMP-1 and UUF-3 samples**

| Sample | Start Solution | Filtrate after 1000 ml | Filtrate after 3000 ml | Filtrate Pool | LRV (DNA) (mass) |
|---|---|---|---|---|---|
| | Concentration ssDNA in pg/ml | | | | |
| CMP-1 Sample 1 | 1382928 | 18452 | 681155 | 421268 | 0,52 |
| CMP-1 Sample 2 | 709312 | 3670 | 526354 | 243705 | 0,46 |
| UUF-3 | 1227868 | 1022331 | 1453257 | 1326224 | 0,0 |

### Example 5:

The fifth experiment has been carried out identical to Examples 1 and 4. However, the temperature of the spinning die was 50 °C, and the weight fraction (wt.-%) of the different components in the polymer spinning solution was:

| | |
|---|---|
| PES | 18 % |
| PVP (K90) | 0,5 % |
| PVP (K30) | 4 % |
| Lupasol P | 4 % |
| NMP | 73,5 % |

The polymer preparation procedure, the membrane formation procedure and all other process steps were kept as described in Example 4.

The dry hollow fiber membrane has an inner diameter of 215 µm and an outer diameter of 315 µm and a fully asymmetric membrane structure. The active separation layer of the membrane is at the inner lumen side. The hydraulic permeability (Lp value) of the membrane is measured from inside to outside using a method described earlier. The membrane showed a hydraulic permeability of 80 x 10⁻⁴ cm³/(cm² bar sec). The sieving coefficient for albumin and myoglobin have been determined and measured in aqueous solutions. From this a nominal cut-off (sieving coefficient for certain solute is 10%) of around 85,000 g/mol.

The charge modified membrane containing Lupasol P as described above are used for retention experiments of single-stranded DNA as disclosed in Examples 1 and 4.

The LRV (DNA) mass was measured for the membrane according to this example and resulted in 2,51. The amount of solution used was 300 ml and the start concentration in the feed solution was 868659 pg/ml ssDNA.

### Example 6:

The sixth experiment has been carried out identical to Examples 1 and 4. However, the temperature of the spinning die was 52 °C, the spinning speed was 35 m/min, and the weight fraction (wt.-%) of the different components in the polymer spinning solution was:

| | |
|---|---|
| PES | 18 % |
| Polyamide (Trogamid T 5000) | 0,5 % |
| PVP (K90) | 0,5 % |
| PVP (K30) | 4 % |
| Lupasol P | 4 % |
| NMP | 73,5 % |

The polymer preparation procedure, the membrane formation procedure and all other process steps were kept as described in Example 4.

The dry hollow fiber membrane has an inner diameter of 215 µm and an outer diameter of 315 µm and a fully asymmetric membrane structure. The active separation layer of the membrane is at the inner lumen side. The hydraulic permeability (Lp value) of the membrane is measured from inside to outside using a method described earlier. The membrane showed a hydraulic permeability of 75 x 10⁻⁴ cm³/(cm² bar sec). The sieving coefficient for albumin and myoglobin have been determined and measured in aqueous solutions. From this a nominal cut-off (sieving coefficient for certain solute is 10%) of around 83,000 g/mol.

The charge modified membrane containing Lupasol P prepared as described above are used for retention experiments of single-stranded DNA as disclosed in Examples 1 and 4.

The LRV (DNA) mass was measured for the membrane according to this example and resulted in 2,11. The amount of solution used was 300 ml and the start concentration in the feed solution was 754267 pg/ml ssDNA.

## Claims

1. Filtration membrane consisting of a polymer blend comprising
a) at least one hydrophobic polymer containing sulfur in its back bone,
b) at least one hydrophilic, uncharged homo-polymer of polyvinylpyrrolidone and
c) at least one polymer containing cationic charges.

2. Filtration membrane according to any of claims 1 to 4, **characterized in that** the hydrophobic polymer containing sulfur in its backbone (a) comprises at least one member of the group consisting of polysulfone, polyethersulfone or polyarylethersulfone.

3. Filtration membrane according to claim 1, **characterized in that** the blend contains at least two hydrophilic uncharged homo-polymers of polyvinylpyrrolidone (b).

4. Filtration membrane according to claim 1 or 2, **characterized in that** the average relative molecular weight of at least one homo-polymer of polyvinylpyrrolidone in the blend (b) is about 10.000 to 100.000, preferably about 30.000 to 60.000.

5. Filtration membrane according to any of claims 1 to 3, **characterized in that** the average relative molecular weight of at least one homo-polymer of polyvinylpyrrolidone in the blend (b) is about 500.000 to 2.000.000, preferably about 800.000 to 2.000.000.

6. Filtration membrane according to any of claims 1 to 5, **characterized in that** the polymer containing cationic charges (c) comprises tertiary and/or quaternary ammonium groups.

7. Filtration membrane according to any of claims 1 to 6, **characterized in that** the polymer containing cationic charges (c) comprises polyethylenimine and/or modified polyethylenimine.

8. Filtration membrane according to any of claims 1 to 7, **characterized in that** the polymer containing cationic charges (c) comprises a modified polyphenyleneoxide having cationic charges.

9. Filtration membrane according to any of claims 1 to 8, **characterized in that** the water soluble polymers containing cationic charges have a relative molecular weight of more than 200.000.

10. Filtration membrane according to any of claims 1 to 9, **characterized in that** the polymer blend comprises additionally at least one polyamide.

11. Filtration membrane according to any of claims 1 to 10, **characterized in that** it comprises pores with pore sizes of 0.001 to 0.01 µm, preferably the average pore size in the selective layer of the membrane is less than 0.01 µm.

12. Filtration membrane according to any of claims 1 to 11, **characterized in that** it shows a nominal cut-off value below 100.000 g/mol.

13. A method of manufacturing a filtration membrane, said method comprising dissolving at least one hydrophobic polymer containing sulfur in its back bone and at least one hydrophilic, uncharged polyvinylpyrrolidone and at least one polymer containing cationic charges in at least one solvent to form a polymer solution, subjecting the formed polymer solution to a diffusion-induced phase separation to prepare a filtration membrane, washing and subsequently drying of the filtration membrane.

14. The method according to claim 13, wherein the diffusion-induced phase separation is performed by a solvent phase inversion spinning, and wherein the formed polymer solution is extruded through an outer ring slit of a nozzle with two concentric openings and a center fluid is extruded through the inner opening of the nozzle.

15. The method according to claim 14, wherein the center fluid comprises 30 to 55 wt.-% of a solvent and 45 to 70 wt.-% of a precipitation medium chosen from the group comprising water, glycerol and other alcohols.

16. The method according to claim 15, wherein the center fluid comprises in addition a hydrophilic polymer, which is preferably contained in a concentration of 0.1 to 2 wt.-%.

17. The method according to any of claims 14 to 16, wherein said polymer solution emerging from the outer slit opening is, on the outside of the precipitating hollow fibre, exposed to a humid steam/air mixture.

18. The method according to claim 17, wherein the temperature of the humid steam/air mixture is within the range of 30 to 70° C.

19. The method according to claim 17 or 18, wherein the relative humidity in the humid steam/air mixture is between 60 and 100%.

20. The method according to any of claims 17 to 19, wherein the humid steam/air mixture has a solvent content of between 0.5 and 5 wt.-% related to the water content.

21. The method according to any of claims 13 to 20, wherein the hydrophobic polymer containing sulfur in its back bone is contained in the solution at a concentration of about 8-23 wt.-%, preferably of about 11 to 17 wt.-%.

22. The method according to any of claims 13 to 21, wherein the at least one polyvinylpyrrolidone is contained in the solution at a concentration of about 1 to 15 wt.-%, preferably at a concentration of about 2 to 10 wt.-%.

23. The method according to any of claims 13 to 22, wherein the polymer solution contains at least two different hydrophilic, uncharged polyvinylpyrrolidones.

24. The method according to claim 23, wherein a first of the at least two different polyvinylpyrrolidones has an average relative molecular weight in the range of from about 10.000 to about 100.000 and a second of the at least two different polyvinylpyrrolidones has an average relative molecular weight in the range of from about 500.000 to about 2.000.000, wherein it is preferred, that the ratio of first to second polyvinylpyrrolidone in the polymer solution is in a range of 2:1 to 10:1, and preferably of about 3:1.

25. The method according to any of claims 13 to 24, wherein the polymer containing cationic charges is contained in the solution at a concentration of about 0.1 to 4.0 wt.-%, preferably 0.2 to 2 wt.-%.

26. The method according to any of claims 13 to 24, wherein additionally at least one polyamide is dissolved in the polymer solution before subjecting the polymer solution for the diffusion-induced phase separation, wherein the polyamide preferably is contained in the polymer solution at a concentration of about 0.005 to 1 wt.-%, particularly preferred from about 0.01 to 1 wt.-%.

27. The method according to any of claims 13 to 26, wherein solvents are chosen from the group comprising N-methylpyrrolidone (NMP), dimethylacetamide, dimethylsulphoxide, dimethylformamide, butyrolactone, N-ethylpyrrolidone, N-octylpyrrolidone and mixtures thereof, wherein N-methylpyrrolidone is preferred as a solvent.

28. Use of a filtration membrane according to any of claims 1 to 12 and/or of a filtration membrane manufactured according to any of claims 13 to 27 for the retention of cytokine inducing substances and/or oligonucleotides, preferably for the retention of cytokine inducing oligonucleotides.
